# EUROPÄISCHE PATENTSCHRIFT

(11) **EP 4 650 386 B1**
(45) Veröffentlichungstag und Bekanntmachung des Hinweises auf die Patenterteilung: **23.09.2026**
(21) Anmeldenummer: 24176575.9
(22) Anmeldetag: 17.05.2024
(51) Int. Cl.: C08G 77/10, C08G 77/12

(54) **VERFAHREN ZUR HERSTELLUNG VON WASSERSTOFFSILOXANEN**
PROCESS FOR THE PREPARATION OF HYDROGENSILOXANES
PROCÉDÉ DE PRÉPARATION D'HYDROGÈNESILOXANES

(43) Veröffentlichungstag der Anmeldung: 19.11.2025
(73) Patentinhaber: Evonik Operations GmbH, 45128 Essen (DE)
(72) Erfinder: KNOTT, Wilfried, 45355 Essen (DE); FERENZ, Michael, 45147 Essen (DE); DUDZIK, Horst, 45326 Essen (DE); BRÖSGEN, Anja, 45478 Mühlheim an der Ruhr (DE)
(74) Vertreter: Evonik Patent Association

(56) Entgegenhaltungen:
- WO-A1-2010/031654
- US-A1- 2023 331 920

## Beschreibung

Die Erfindung liegt auf dem Gebiet der Silikonchemie und betrifft insbesondere ein Verfahren zur Herstellung von Wasserstoffsiloxanen unter Verwendung der Ultraschallmessung.

Wasserstoffsiloxane, das heißt, SiH-Gruppen aufweisende Siloxane spielen als Äquilibrate eine bedeutende Rolle als Vorprodukte beispielsweise für deren Weiterverarbeitung zu Polyethersiloxanen, Silikonacrylaten, Silikonquats, Silikonwachsen und zahlreichen weiteren Derivaten.

Neben den ältesten, homogenkatalytisch geführten Äquilibrierverfahren haben in den vergangenen Jahren zunehmend heterogen katalytisch gestaltete Prozesse Eingang in die industrielle Silikonherstellung genommen, die sich der Festphasenkatalysatoren bedienen.

Ein wesentlicher Vorteil des sauren Festphasenkatalysators bei der Herstellung von Wasserstoffsiloxanen liegt zum Beispiel darin, dass man die flüssige Siloxanphase ohne aufwendige Nachbehandlung, insbesondere ohne die Neutralisation einer sonst üblicherweise eingesetzten Homogensäure mit anschließender filtrierender Abtrennung des gebildeten Salzes, von dem sauren Festphasenkatalysator abtrennen kann.

Unter den zur Äquilibrierung von Wasserstoffsiloxanen eingesetzten Festphasenkatalysatoren kommt hierbei den makroporösen, sulfonsauren Polystyrolharzen eine herausragende Bedeutung zu. Diese erweisen sich insbesondere als geeignet zur Äquilibrierung von Siloxansystemen, die Methylhydrogensiloxygruppen tragende Siloxankomponenten besitzen.

Dieser Zielsetzung folgend, richtet sich die Lehre der WO 2010/031654 A1 insbesondere auf die Äquilibrierung von Poly(methylhydrogen)-polydimethylsiloxan-Copolymeren an einem sulfonsauren Kationenaustauscherharz, wobei man ein als Ausgangsmaterial benutztes Organosiloxan oder ein Organosiloxangemisch bei einer Temperatur von 10 °C bis 120 °C mit einem makrovernetzten, Sulfonsäuregruppen enthaltenden Kationenaustauscherharz in Kontakt bringt und die erhaltenen äquilibrierten Organosiloxane isoliert. Das gemäß Lehre der WO 2010/031654 A1 eingesetzte Kationenaustauscherharz ist dadurch charakterisiert, dass das Produkt P aus dessen spezifischer Oberfläche und dessen mittlerem Porendurchmesser P ≥ 2,2 x 10⁻³m³/kg und die spezifische Oberfläche A ≥ 35 m²/g betragen und dass es einen Wassergehalt von 8 bis 25 Gewichtsprozent aufweist, bezogen auf die Masse des eingesetzten Kationenaustauschers.

In WO 2010/074831 A1 wird ein Verfahren zur Herstellung von Siloxanen, umfassend das Umsetzen von mindestens zwei Siloxanen in Gegenwart eines Ionenaustauscherharzkatalysators, der 6 bis 19 Gew.-% Wasser umfasst, beschrieben, wobei dort vorzugsweise mindestens eines der Siloxane mindestens ein siliziumgebundenes Wasserstoffatom umfasst, und wobei vorzugsweise mindestens eines der Siloxane Poly(methyl)hydrogensiloxan oder ein cyclisches Siloxan ist. Insbesondere wird dort das Reagierenlassen von mindestens zwei Siloxanen an einem wasserhaltigen lonenaustauschharzkatalysator beschrieben, wobei mindestens ein Siloxan ein siliciumgebundenes Wasserstoffatom umfasst und wobei man den lonenaustauschharzkatalysator nach dem Reagierenlassen zurückgewinnt und durch Hinzufügen von Wasser zu dem Ionenaustauschharzkatalysator eine Wasserbeladung von 6 bis 19 Gewichtsprozent bezogen auf das Trockengewicht des lonenaustauschharzkatalysators einstellt und danach wieder mindestens zwei Siloxane in Gegenwart dieses lonenaustauschharzkatalysators reagieren lässt. Als Reaktanden werden in den Beispielen der WO 2010/074831 A1 Octamethylcyclotetrasiloxan und Tetramethyldisiloxan gewählt und man betrachtet den gaschromatographisch bestimmten Gehalt von Octamethylcyclotetrasiloxan (D₄) in der Siloxanmatrix am Ende der Reaktion als Indikator für eine erfolgte Gleichgewichtseinstellung. Außerdem wird jeweils ein vorgegebener SiH-Gehalt der Reaktionsmischung nur zu Beginn der Reaktion referiert. Die WO 2010/074831 A1 macht jedoch keine Angaben zu dem SiH-Gehalt der Reaktionsmischung am Ende einer jeden Umsetzung. Neben dem über Gaschromatographie-bestimmten D₄-Gehalt ist jedoch der SiH-Gehalt des Reaktionsproduktes von noch größerer Bedeutung, da alle üblichen, gerüstaufbauenden Folgereaktionen (wie zum Beispiel die Hydrosilylierung oder dehydrogenative Umsetzungen) zur Festlegung der jeweiligen Stöchiometrie diese Bezugsgröße benötigen.

Ebenfalls an Beispiel eines einfachen α,ω-Dihydrogenpolydimethylsiloxans offenbart die DE 102014211680 A1 ihre Lehre zur Herstellung von Siloxanen unter regenerationsfreier Weiterverwendung der Ionenaustauscherharze, die auf das Reagierenlassen von mindestens zwei Siloxanen am sulfonsauren Kationenaustauscherharz abstellt, wobei mindestens ein OHfunktionelles Siloxan eingesetzt wird. In den Beispielen der DE 102014211680 A1 wurden α,ω-Dihydrogenpolydimethylsiloxan und Dekamethylcyclopentasiloxan eingesetzt. Im Rahmen der Offenbarung der DE102014211680A1 wird gezeigt, dass sich eine Vielzahl sulfonsaurer Kationenaustauscherharze für die unter SiOSi-Umlagerung verlaufende Äquilibrierung von α,ω-Dihydrogenpolydimethylsiloxanen eignet. DE102014211680A1 zeigt jedoch nicht, wie man zu äquilibrierten, das heißt, möglichst vollständig gleichverteilten SiH-Siloxanen gelangt, die sowohl kettenterminale als auch seitständige SiH-Funktionen aufweisen.

US 2023/331920 A1 offenbart die Herstellung von Poly(diorgano)(organohydrogen)siloxanCopolymeren durch Äquilibrierung von Diorgano- und Methylhydrogen-siloxanhaltigen Ausgangsmaterialien unter Verwendung eines sauren kationischen Austauscherharzkatalysators. Dimethylhydrogensiloxy-terminierte Polysiloxane können als Ausgangsstoffe verwendet werden.

Weiterhin seien hier noch folgende Schriften des Standes Technik aufgeführt, die sich mit der Herstellung verschiedenartig strukturierter Wasserstoffsiloxane am sulfonsauren Kationenaustauscherharz beschäftigen: WO 2010/031654 A1, DE102005001039 A1, EP 1 439 200 A1, EP 2 628 763 A1 und die Offenlegungsschrift DE 21 52 270 A.

Die SiH-Funktion erhaltende Äquilibrierung von sowohl Dimethylhydrogensiloxygruppen-tragenden als auch Methylhydrogensiloxyeinheiten-tragenden Siloxanen in der Äquilibriermatrix stellt bis heute eine enorme Herausforderung dar, so dass Supersäuren wie die Perfluoralkansulfonsäuren, insbesondere Trifluormethansulfonsäure und Perfluorbutansulfonsäure nach wie vor die bevorzugten Homogenkatalysatoren für die industrielle Äquilibrierung dieser besonderen Wasserstoffsiloxane sind.

Die Bewältigung dieser Herausforderung, vorzugsweise Wasserstoffsiloxane des allgemeinen 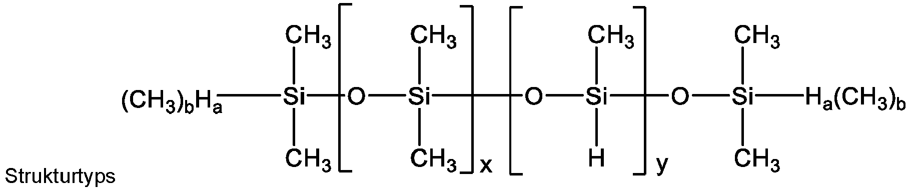 betreffend, wird in den kommenden Jahren zunehmend schwieriger, nicht zuletzt, da in Europa Maßnahmen zur EU-weiten Beschränkung von per- und polyfluorierten Alkylsubstanzen (PFAS) geplant sind, wovon auch bewährte, homogen wirksame Äquilibrierkatalysatoren wie zum Beispiel Trifluormethansulfonsäure betroffen wären.

Die besondere technische Herausforderung bei der Äquilibrierung dieser Dimethylhydrogen-siloxygruppen tragenden, unverzweigten, jedoch auch noch Methylhydrogensiloxygruppen und Dimethylsiloxygruppen aufweisenden Wasserstoffsiloxanen liegt darin, eine weitestgehend statistische Gleichverteilung von SiH-Funktionen entlang der Oligomerkette zu erreichen, ohne dass dabei zu viele von den empfindlichen Dimethylhydrogen-siloxygruppen durch dehydrogenative Prozesse verloren gehen.

Im Gegensatz zu perfluorierten Supersäuren ist die wirksame Azidität sulfonsaurer Ionenaustauscherharze in SiH-Gruppen enthaltenden Siloxanmatrices deutlich niedriger, so dass es beim Einsatz von sulfonsauren Ionenaustauscherharzen sehr darauf ankommt, die geeigneten Reaktionsparameter für das jeweilige Äquilibriersystem zu finden.

Die benötigte Azidität richtet sich dabei konkret nach der zu lösenden Äquilibrieraufgabe, das heißt nach der Struktur des angestrebten Wasserstoffsiloxans. Die Synthese von α,ω-Dihydrogen-polydimethylsiloxanen erhebt dabei die geringsten Ansprüche an die vom Katalysator ausgeübte Azidität, das heißt seiner Möglichkeit, Protonen bereitzustellen. Setzt man zum Beispiel ein Gemisch bestehend aus Octamethylcyclotetrasiloxan und Tetramethyldisiloxan unter saurer Katalyse zu α,ω-Dihydrogen-polydimethylsiloxanen um, so benötigt man für die Öffnung eines Octamethylcyclotetrasiloxan-Moleküls eingeleitet durch Protonierung des Sauerstoffatoms in einer darin enthaltenen SiOSi-Bindung theoretisch nur ein Proton. Ebenfalls nur ein Proton wird für die Öffnung der im Tetramethyldisiloxanmolekül enthaltenen SiOSi-Bindung theoretisch benötigt. Die Einstellung der Oligomerkettenverteilung verlangt zudem eine vergleichsweise geringe protische Aktivität.

Vollkommen anders liegen die Verhältnisse jedoch bei denjenigen copolymeren Siloxanen, die Methylhydrogensiloxyeinheiten (D^{H}-Einheiten) und Dimethylsiloxy-Einheiten (D-Einheiten) neben Trimethylsiloxygruppen (M-Einheiten) enthalten und die beispielsweise aus Poly(methylhydrogen)siloxan und Octamethylcyclotetrasiloxan und Hexamethyldisiloxan unter saurer Katalyse hergestellt werden. Für die Öffnung eines Octamethylcyclotetrasiloxan-Moleküls nach Protonierung des Sauerstoffatoms in einer der 4 darin enthaltenen SiOSi-Bindungen wird theoretisch nur ein Proton benötigt. Gleichfalls nur ein Proton ist für die Einleitung der Öffnung der im Hexamethyldisiloxan-Molekül enthaltenen SiOSi-Bindung theoretisch erforderlich. Auch die molekulare Zerlegung des Poly(methylhydrogen)siloxans benötigt pro Siloxanylbindung (SiOSi-Bindung) theoretisch jeweils nur 1 Proton. Um jedoch eine statistische Verteilung der Methylhydrogensiloxy-Einheiten entlang der Oligomerketten des angestrebten Poly(methylhydro-gensiloxan)-Polydimethylsiloxan-Copolymers im Zeitfenster der Reaktion zu erreichen, werden ungleich mehr Protonen pro Volumen Reaktionsmasse benötigt, da nur ein nahezu zeitgleiches Aufbrechen und Neuknüpfen vieler SiOSi-Bindungen ein Copolymer hervorbringt, das keine Kumulation(en) von Methylhydrogensiloxyeinheiten innerhalb der Siloxanoligomerketten aufweist. Diese rein statistisch-theoretische Betrachtung der für die Äquilibrierung solcher Siloxancopolymeren benötigten Azidität erfährt ihre experimentelle Untermauerung durch die Publikation von G. Sauvet, M. Moreau. G. Hélary, E. Daudet, P. Cancouet "Functional polysiloxanes. I. Microstructure of poily(hydrogenmethylsiloxane-co-dimethylsiloxane)s obtained by cationic copolymerization" in J. Polymer Science, Part A: Polymer Chemistry Vol. 38, 826-36 (2000), in der die Autoren (auf Seite 833, ibid.) zu der klaren Folgerung gelangen, dass eine Siloxanbindung (SiOSi) zwischen zwei D^{H}-Einheiten weniger reaktiv als diejenige zwischen zwei D-Einheiten ist, was unmittelbar die in der sauren Äquilibrierung involvierten Teilreaktionen wie Backbiting, Crosslinking und Azidolyse beeinflusst.

Die Kumulation im Sinne einer Aneinanderreihung von Methylhydrogensiloxygruppen ist vorzugsweise weitestmöglich zu vermeiden, da sich die spätere Verwendungsfähigkeit der aus Wasserstoffsiloxan-Äquilibraten in Hydrosilylierungsreaktionen, insbesondere in solchen, bei denen beispielsweise mit Hilfe von Polyethergemischen Polyethersiloxane für anspruchsvolle tensidische Anwendungen gewonnen werden, wie zum Beispiel als Stabilisator in Polyurethanschäumen, unmittelbar an das Strukturmerkmal von Copolymeren knüpft, deren Polyether-tragende Si-Atome möglichst statistisch, das heißt weitestmöglich voneinander isoliert, weil durch D-Einheiten voneinander getrennt, über die Oligomerketten verteilt sind.

Sauvet et al. (Seite 835, rechte Spalte, ibid.) gelangen zu der Aussage, dass die Kenntnis der Verteilung von D- und D^{H}-Einheiten in der Kette der Schlüssel zum Verständnis der Eigenschaften der (SiH)-Copolymeren an sich und noch viel mehr der Eigenschaften der daraus abgeleiteten, funktionalisierten Derivate ist und weisen auf den direkten Einfluss der Verteilung von D- und D^{H}-Einheiten in der Kette auf die Reaktionsgeschwindigkeit bei Hydrosilylierungsreaktionen hin.

In diesem Zusammenhang haben P. Cancouet, S. Pernin, G. Hélary und G. Sauvet in ihrem Artikel "Functional polysiloxanes. II. Neighboring effect in the hydrosilylation of poly(hydrogen-methylsiloxane-co-dimethylsiloxane)s by allylglycidylether" in J. Polymer Science, Part A: Polymer Chemistry, Vol. 38, 837-45 (2000) den Nachbargruppeneffekt bei der hydrosilylierenden Anlagerung von Allylglycidylether an Poly(methylhydrogensiloxan)-Polydimethylsiloxan-Copolymere untersucht und aufgezeigt, dass die Präsenz von Methylhydrogensiloxy-Diaden (D^{H}D^{H}) zu einer beschleunigten Hydrosilylierung führt, während isolierte, das heißt, von D-Einheiten umgebene D^{H}-Einheiten(DD^{H}D) eine langsamere Reaktionskinetik zeigen. Vor dem Hintergrund dieses Befundes ist dem Fachmann verständlich, dass die Mikrostruktur der Wasserstoffsiloxane insbesondere bei der Anlagerung von Polyethergemischen mit ihrer eigenen Bandbreite an Individualreaktivitäten einen maßgeblichen Einfluss auf die spätere Zielstruktur des Polyethersiloxan-Copolymers nimmt.

Methoden zur Ermittlung der molekularen Feinstruktur in Wasserstoffsiloxanen sind bekannt. So benutzen G. Sauvet et al. in J. Polymer Science, Part A: Polymer Chemistry Vol. 38, 826-36 (2000) insbesondere die hochauflösende ²⁹Si-NMR-Spektroskopie zum Nachweis von Diaden, Triaden, Pentaden, etc., das heißt, von Kumulationen im Sinne von direkten Aneinanderreihungen von Methylhydrogensiloxygruppen in einem Poly(methylhydrogensiloxan)-Polydimethylsiloxan-Copolymer.

Bisher hat die NMR-Technik als prozessbegleitende Analysenmethode, speziell als Real-Time-Methode, jedoch keinen Platz in der industriellen Herstellung von Polyorganohydrogensiloxanen erlangt, was unter anderem an den Kosten für das zu installierende Equipment aber insbesondere auch an dem grundsätzlichen Problem liegt, Quellen extremstarker elektromagnetischer Strahlung wie NMR-Magneten und Messköpfe betriebssicher in explosionsgeschützten Produktionsanlagen unterzubringen.

Die Fragestellung einer prozessbegleitenden Analytik sucht die Lehre der WO2022/132446 A1 zu adressieren, indem dort speziell durch Beispiele von Poly(methylhydrogen)polydimethylsiloxan-copolymeren gestützt, schwingungsspektroskopische Methoden wie die Infrarot- und die Ramanspektroskopie zur Ermittlung direkt miteinander verknüpfter Methylhydrogensiloxyeinheiten (D^{H}D^{H})- und durch Dimethylsiloxyeinheiten isolierter Methylhydrogensiloxyeinheiten (DD^{H}D)-Strukturen in der säurekatalysierten Äquilibrierung von Siloxanen, die als D-Quelle und Siloxanen die als D^{H}-Quelle fungieren, zur Beurteilung des erzielten Verteilungsgrades herangezogen werden. Auf die Härtungsgeschwindigkeit in Siloxanelastomeren abstellend, wird ein direkter Zusammenhang zwischen der schwingungsspektroskopisch ermittelten Konzentration isolierter, das heißt statistisch verteilter Methylhydrogensiloxyeinheiten und der Härtungskinetik bei Verwendung des jeweiligen SiH-Copolymeren gesehen. So benötigt (ibid. Seite 18, Tabelle 3) ein SiH-Copolymer aus Batch 1 nach 3 Stunden Äquilibrierzeit und einer entkoppelten SiH-IR-Intensität von 2,08 eingebracht in ein Elastomersystem 144,3 Sekunden zur Durchhärtung, während ein aus Batch 7 stammendes SiH-Copolymer nach 16 Stunden Äquilibrierzeit und mit einer entkoppelten SiH-IR-Intensität von 3,32 bereits nach nur 61,4 Sekunden zur Härtung des Elastomersystems führt.

Insbesondere als Zielprodukte die verschiedenartigsten Härtungssysteme (Kondensations- und/ oder Hydrosilylierungs-härtbare Produkte) ansteuernd, soll die in der WO2022/132446 A1 dargestellte Methode helfen, Chargenzeiten zu minimieren und gleichzeitig eine höhere statistische Uniformität des äquilibrierten SiH-Copolymers zu erreichen. Welchen Weg man zur Erzielung weitestgehend statistisch uniformer, speziell auch noch Dimethylhydrogensiloxygruppen enthaltender Wasserstoffsiloxanäquilibrate einschlagen muss, lehrt die WO2022/132446 A1 allerdings nicht.

Es ist bekannt, dass man die Ausbreitung von Ultraschall in flüssigen Medien unter Anderem zur Konzentrations- und Dichtebestimmung nutzen kann. So stellen zum Beispiel A. Zips in seinem Artikel "Prozesskontrolle mittels Ultraschall" in Technisches Messen 67 (2000), 201-207 und B. Henning in seinem Artikel "Die akustische Impedanz als Messgröße zur Charakterisierung flüssiger Stoffsysteme" in Technisches Messen 71 (2004), 492-500 auf die Theorie und prinzipielle Anwendungen von Ultraschall zur Konzentrationsmessung in Flüssigkeiten ab.

Bevorzugt mit Blick auf Silikonpolyether-Copolymere, die Eingang in sehr empfindliche Anwendungen nehmen, wie zum Beispiel im Falle der Polyurethanhartschaumstabilisatoren, beschäftigt sich die vorliegende Erfindung mit Möglichkeiten der Erreichung einer weitestgehend statistischen Gleichverteilung von SiH-Funktionalität in sowohl über seitständiges SiH in Form von Methylhydrogensiloxygruppen als auch über Dimethylhydrogensiloxygruppen sowie Dimethylsiloxygruppen sowie vorzugsweise noch über Anteile von Trimethylsiloxygruppen verfügenden Wasserstoffsiloxanen.

Die Aufgabe der vorliegenden Erfindung war es, ein Äquilibrierverfahren für Wasserstoffsiloxane bereitzustellen, das es vorzugsweise erlaubt, noch am Produktionsort die Äquilibratqualität zu beurteilen. Dieses Äquilibrierverfahren soll insbesondere für diejenigen Wasserstoffsiloxane geeignet sein, die sowohl über seitständiges SiH in Form von Methylhydrogensiloxygruppen als auch über Dimethylhydrogen-siloxygruppen sowie Dimethylsiloxygruppen sowie vorzugsweise noch über Anteile von Trimethylsiloxygruppen verfügen.

Überraschenderweise haben die Erfinder nun gefunden, dass man die Herstellung von Wasserstoffsiloxanäquilibraten erfolgreich an sulfonsaurem Ionenaustauscherharz vornehmen kann, wobei man die Reaktionsmischung durch Ultraschallmessung überwacht, um einen geeigneten Zeitpunkt zur Beendigung der Reaktion bestimmen zu können. Die Ultraschallmessung dient dabei vorzugsweise zur Erfassung der Schallgeschwindigkeit in der Reaktionsmischung.

Die o.g. Aufgabe wird gelöst vom Gegenstand der Erfindung. Der Gegenstand der Erfindung ist ein Verfahren zum Herstellen von Dimethylhydrogensiloxygruppen tragenden, unverzweigten Wasserstoffsiloxanen, umfassend:
Bereitstellen einer Siloxan-Mischung umfassend mindestens zwei verschiedene Siloxane und Reagierenlassen dieser Siloxan-Mischung in Gegenwart eines sulfonsauren Ionenaustauscherharzes im Sinne einer Äquilibrierungsreaktion unter Bildung einer Reaktionsmischung,
wobei die eingesetzten Siloxane zusammen betrachtet über Dimethylhydrogensiloxygruppen, Methylhydrogensiloxygruppen, Dimethylsiloxygruppen sowie vorzugsweise über Trimethylsiloxygruppen verfügen,
und wobei man
   (a) die Reaktionsmischung durch Ultraschallmessung überwacht, um den Zeitpunkt zur Beendigung der Äquilibrierungsreaktion zu ermitteln,
   (b) die Äquilibrierungsreaktion beendet, wenn der in (a) ermittelte Zeitpunkt erreicht ist.

Dabei dient die Ultraschallmessung der Erfassung der Schallgeschwindigkeit in der Reaktionsmischung.

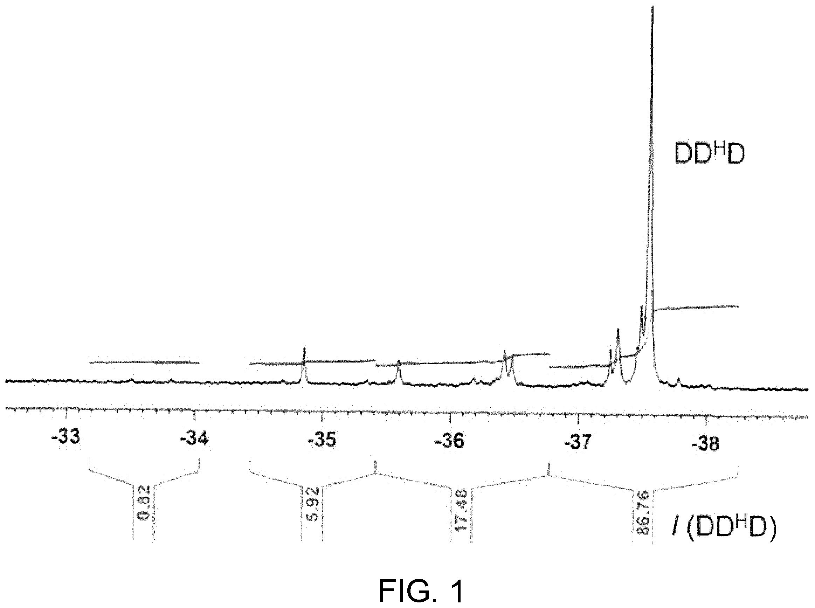

### Kurze Beschreibung der Zeichnungen FIG. 1 bis FIG. 4

FIG. 1 zeigt einen beispielhaften Verschiebungsbereich der Methylhydrogensiloxygruppen enthaltenden Triadensignale mit zugehörigen Integralen *I* entnommen aus dem ²⁹Si-NMR-Spektrum im Zusammenhang mit dem Beispiel 1.

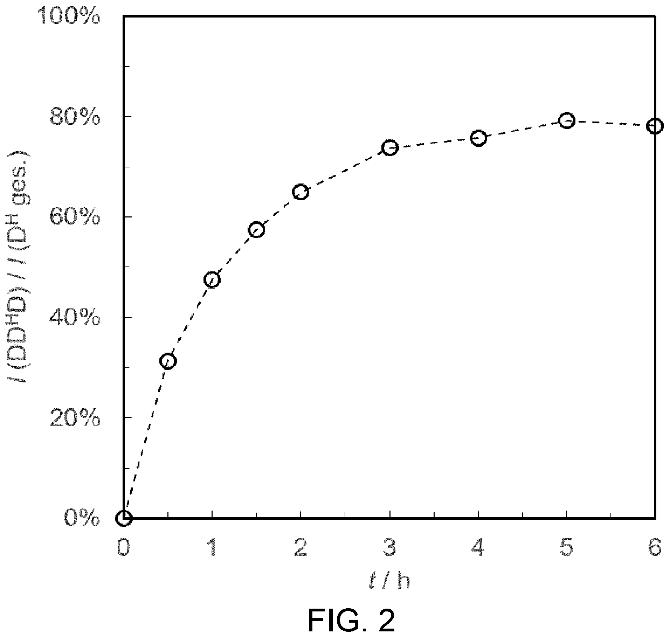

FIG. 2 zeigt eine beispielhafte Entwicklung des prozentualen Anteils isolierter Methylhydrogensiloxygruppen (= DD^{H}D) im Wasserstoffsiloxanäquilibrat bezogen auf die Summe aller Methylhydrogensiloxygruppen *I* (DD^{H}D) / *I* (D^{H} ges.) als Funktion der Äquilibrierzeit t im Zusammenhang mit dem Beispiel 1, wobei der prozentuale Anteil isolierter Methylhydrogensiloxygruppen berechnet wurde, indem das Integral des Signales, welches im ²⁹Si-NMR-Spektrum den DD^{H}D-Gruppen zugeordnet werden kann, *I* (DD^{H}D), durch die Summe aller Integrale, welche im ²⁹Si-NMR-Spektrum den D^{H}-Gruppen zugeordnet werden können, *I* (D^{H} ges.), geteilt wurde.

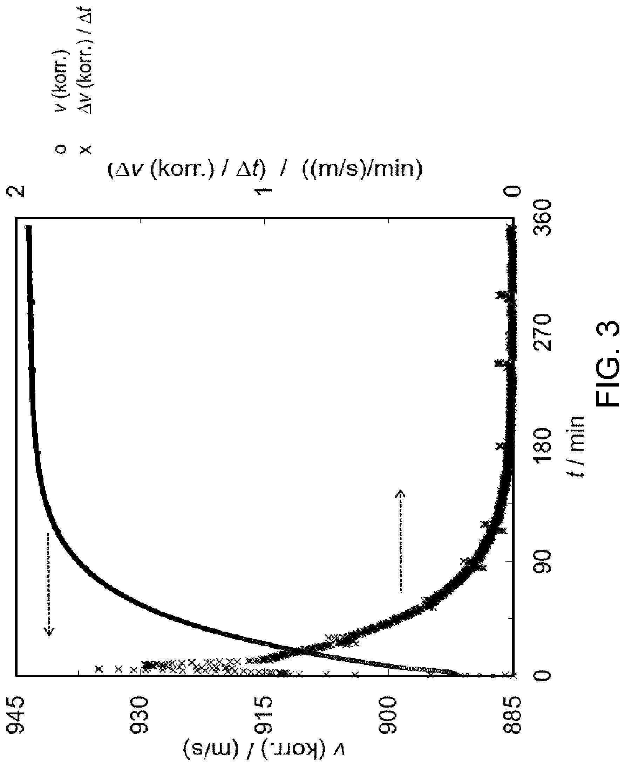

FIG. 3 zeigt eine beispielhafte Auftragung der für ein Wasserstoffsiloxan bei T_{Reaktion} = 40°C experimentell bestimmten Entwicklung der temperaturkorrigierten Schallgeschwindigkeit v (korr.) als Funktion der Reaktionszeit t im Zusammenhang mit dem Beispiel 1 sowie eine beispielhafte Auftragung der für ein Wasserstoffsiloxan bei T_{Reaktion} = 40°C experimentell bestimmten Entwicklung der Ableitung der temperaturkorrigierten Schallgeschwindigkeit nach der Zeit (= Intensitätsänderung dargestellt als Differenzenquotient Δ*v*(korr.) /Δ*t*) als Funktion der Reaktionszeit im Zusammenhang mit dem Beispiel 1.

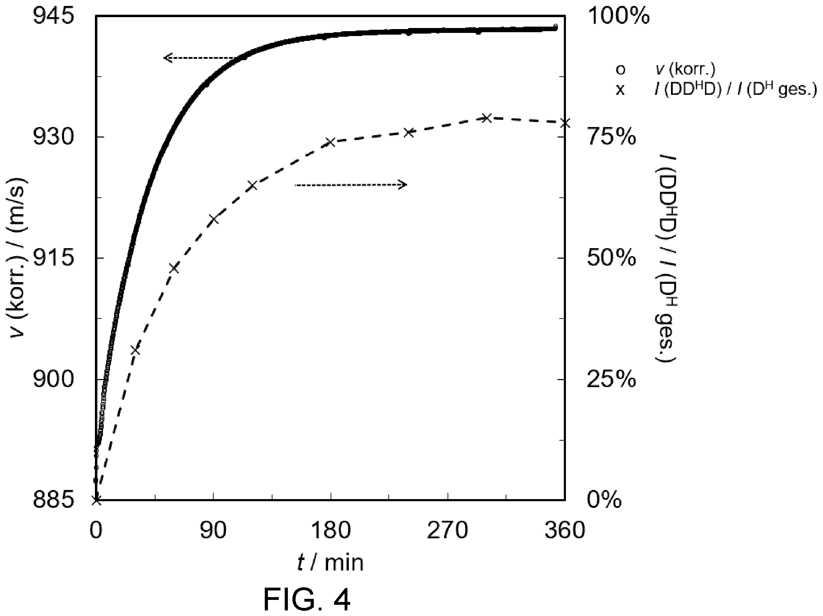

FIG. 4 zeigt eine beispielhafte Auftragung der durch ²⁹Si-NMR-Analytik ermittelten Entwicklung des prozentualen Anteils isolierter Methylhydrogensiloxygruppen (= DD^{H}D) im Wasserstoffsiloxanäquilibrat bezogen auf die Summe aller Methylhydrogensiloxygruppen *I* (DD^{H}D)/ *I* (D^{H} ges.) als Funktion der Äquilibrierzeit t im Zusammenhang mit dem Beispiel 1 sowie eine beispielhafte Auftragung der temperaturkorrigierten Schallgeschwindigkeiten v (korr.) für das im erfindungsgemäßen Beispiel 1 hergestellte Wasserstoffsiloxan als Funktion der Äquilibrierzeit t.

Die Zeichnungen FIG. 1 bis FIG. 4 dienen allein zur weiteren beispielhaften Erläuterung der vorliegenden Erfindung insbesondere mit Blick auf den experimentellen Beispielteil, Beispiel 1, und stellen keinerlei Beschränkung der vorliegenden Erfindung dar.

Unter "Ultraschallmessung" wird im Sinne der Erfindung die messtechnische Erfassung der Schallgeschwindigkeit in der Reaktionsmischung mit Hilfe von Schallwellen verstanden, die im Frequenzbereich des Ultraschalls angesiedelt sind.

Die Erfindung ermöglicht vorzugsweise die SiH-konservierende Herstellung von säurefreien Wasserstoffsiloxanen, die über Methylhydrogensiloxygruppen als auch über Dimethylhydrogensiloxygruppen sowie Dimethylsiloxygruppen sowie vorzugsweise noch über Anteile von Trimethylsiloxygruppen verfügen und eine weitestgehend statistische Gleichverteilung der in ihnen enthaltenen SiH-Funktionen über die Oligomerketten aufweisen.

Ultraschall ist an sich bekannt. Damit wird Schall bezeichnet, dessen Frequenzen im Bereich von 20 kHz bis 1 GHz liegen.

Zur Ultraschallmessung im Sinne der Erfindung geeignete Geräte bzw. Messtechnik sind kommerziell verfügbar. Es können zum Beispiel LiquiSonic^{®}-Geräte der Firma SensoTech GmbH (Magdeburg-Barleben/ Deutschland) oder z.B. auch Geräte von der Fa. Mat Mess- und Analysentechnik Dr. Frank Dinger/ (Hofgeismar/Deutschland) verwendet werden. Solche Geräte können eine zuverlässige Erfassung und Aufzeichnung der Schallgeschwindigkeit und deren Ableitung nach der Zeit ermöglichen.

Ein bevorzugter Zeitpunkt zur Beendigung der Äquilibrierungsreaktion ist derjenige Zeitpunkt, zu dem chemisch gesehen das Äquilibriergleichgewicht erreicht ist, das ist vorzugsweise derjenige Zeitpunkt, an dem z.B. die Triadenverteilung entlang der Siloxanoligomerketten keinerlei signifikante Änderung erfährt, das heißt, zeitlich im Rahmen der mit der ²⁹Si-NMR-Analytik abbildbaren Genauigkeit vorzugsweise konstant bleibt. Festzumachen wäre diese angestrebte Konstanz vorzugsweise an dem Quotienten Q = *I* / *I* (D^{H}ges.). Falls sich Q vorzugsweise um weniger als 0,02/ Stunde ändert, gilt die statistische Gleichverteilung z. B. als erreicht. Damit einhergehend bleibt z.B. auch die gaschromatographisch erfassbare Konzentration an Siloxanzyklen (D₄ + D₅+ D₆) vorzugsweise konstant.

Die Ultraschallmessung ermöglicht eine Überwachung der Äquilibrierungsreaktion über den gesamten Reaktionsverlauf und sie ermöglicht es, auf einfache Weise, den bevorzugten Zeitpunkt zur Beendigung der Äquilibrierungsreaktion zu ermitteln, und zwar vorzugsweise ohne auf die zuvor genannte ²⁹Si-NMR-Analytik zurückgreifen zu müssen. Vorzugsweise kann aber von der zuvor genannten ²⁹Si-NMR-Analytik ergänzender Gebrauch gemacht werden.

Es ist bevorzugt, dass durch die Ultraschallmessung die Schallgeschwindigkeit in der Reaktionsmischung und/oder die Ableitung der Schallgeschwindigkeit nach der Zeit in der Reaktionsmischung erfasst werden.

Die Schallgeschwindigkeit (Formelzeichen v) ist definiert als ds/dt, also als Ableitung des vom Schall zurückgelegten Weges (s) nach der Zeit (*t*). Sie wird angeben in m/s.

Die Ableitung der Schallgeschwindigkeit nach der Zeit ist definiert als d*v*/d*t* mit der Einheit m/s².

Die vorliegende Erfindung kann es ermöglichen, z.B. über Betrachtung der Änderung der Schallgeschwindigkeit in der Reaktionsmischung oder z.B. über die Betrachtung der Ableitung der Schallgeschwindigkeit nach der Zeit, das Erreichen eines bevorzugt angestrebten Äquilibrierziels zu eruieren, um somit den geeigneten Zeitpunkt zur Beendigung der Äquilibrierungsreaktion zu ermitteln.

Es ist bevorzugt, dass der geeignete Zeitpunkt zur Beendigung der Äquilibrierungsreaktion über die Änderung der Schallgeschwindigkeit in der Reaktionsmischung bestimmt wird.

Vorzugsweise wird die Schallgeschwindigkeit in der Reaktionsmischung vor Start der Äquilibrierungsreaktion verglichen mit dem Verlauf der Schallgeschwindigkeit bei Fortgang der Äquilibrierungsreaktion. Dieser Vergleich ermöglicht eine einfache Reaktionsverfolgung.

Es ist bevorzugt, dass zunächst im jeweils betrachteten Medium, vorzugsweise in dem betreffenden Dimethylhydrogensiloxygruppen tragenden, unverzweigten Wasserstoffsiloxan, der Einfluss der Messtemperatur auf die Schallgeschwindigkeit ermittelt wird, um eine Korrekturfunktion zu bestimmen, so dass sich gemessenen Schallgeschwindigkeiten in temperaturkorrigierte Schallgeschwindigkeiten umrechnen lassen.

Mit "jeweils betrachteten Medium" sind die zur Äquilibrierung eingesetzte Ausgangsmischung an Siloxanedukten, die sich daraus ableitenden, noch nicht vollständig äquilibrierten Wasserstoffsiloxane und erfindungsgemäß besonders bevorzugt das äquilibrierte, Dimethylhydrogensiloxygruppen tragende, unverzweigte Wasserstoffsiloxan gemeint.

Unter Korrekturfunktion wird im Sinne der Erfindung die einfache mathematische Funktion verstanden, die den Einfluss der Temperatur auf die Schallgeschwindigkeit in dem jeweils betrachteten Medium, vorzugsweise jeweiligen Wasserstoffsiloxan, abbildet.

Unter temperaturkorrigierter Schallgeschwindigkeit wird im Sinne der Erfindung daher eine Schallgeschwindigkeit verstanden, welche nur noch von der Zusammensetzung des jeweils betrachteten Mediums abhängt.

Zur Ermittlung der Korrekturfunktion, die den Einfluss der Temperatur auf die Schallgeschwindigkeit im betrachteten Medium, vorzugsweise in dem betreffenden Wasserstoffsiloxan, abbildet, können vorzugsweise die Schallgeschwindigkeiten in einem Temperaturbereich zwischen Tₘᵢₙ und Tₘₐₓ gemessen werden, wobei die spätere Messtemperatur natürlich in diesem Temperaturbereich liegen sollte, und die erhaltenen Wertepaare werden mit Hilfe einer Ausgleichsgeraden miteinander verbunden. Mit Tₘᵢₙ ist 20°C und mit T ₘₐₓ ist 50°C gemeint.

Die Steigung dieser Geraden ergibt dann die Änderung der Schallgeschwindigkeit pro Grad Celsius als Abweichung zur jeweiligen Bezugstemperatur T (Bezug). Mit Bezugstemperatur T (Bezug) ist die angestrebte Umsetzungstemperatur gemeint.

Für das jeweilig betrachtete Medium, vorzugsweise Wasserstoffsiloxan, kann damit ein numerischer Wert für die Steigung der Geraden in (m/s)/°C ermittelt werden, so dass sich die gemessenen Schallgeschwindigkeiten v (Messung) in temperaturkorrigierte Schallgeschwindigkeiten v (korr.) umrechnen lassen: $v \left(korr.\right) = v \left(Messung\right) - Steigungswert \left(m/s\right) / ° C * \left(T \left(Bezug\right)-T \left(Messung\right)\right)$

Ein ganz besonders geeigneter Zeitpunkt zur Beendigung der Äquilibrierungsreaktion ist vorzugsweise dann erreicht, wenn die Änderung der Schallgeschwindigkeit kleiner 0,25% pro 15 Minuten, bevorzugt kleiner 0,15% pro 15 Minuten ist.

Die Erfinder haben weiterhin gefunden, dass es eine optional durchführbare begleitende, hochauflösende ²⁹Si-NMR-Spektroskopie vorzugsweise ermöglichen kann, die Messdaten der Ultraschallmessung mit den aus der NMR-Spektroskopie gewinnbaren Aussagen bezüglich der Mikrostruktur der erhaltenen Äquilibrate zu korrelieren und diesen Datenabgleich für weitere Ultraschallmessungen vorzugsweise so zu nutzen, dass man in eindeutiger Weise die TriadenVerteilung von Methylhydrogensiloxygruppen in den Siloxanoligomerketten durch Ultraschallkennwerte bestimmen kann.

Mit dem Begriff der Mikrostruktur ist die Art der Verteilung der Methylhydrogensiloxygruppen entlang der Siloxankette gemeint.

Unter dem Begriff der Triade sind jeweils drei über zwei Siloxanylbindungen verknüpfte Si-Einheiten zum Beispiel DD^{H}D vs. DD^{H}D^{H} vs. D^{H}D^{H}D^{H} vs. MD^{H}D vs. MD^{H}D^{H} vs. M^{H}D^{H}D vs. M^{H}D^{H}D^{H} gemeint. Im Rahmen dieser Erfindung werden insbesondere die folgenden Triaden DD^{H}D vs. DD^{H}D^{H} vs. D^{H}D^{H}D^{H} betrachtet.

Unter dem Begriff Triadenverteilung wird daher im Rahmen der Erfindung die ²⁹Si-NMR-spektroskopisch erfassbare Population dieser Triaden DD^{H}D vs. DD^{H}D^{H} vs. D^{H}D^{H}D^{H} verstanden. Es ist bevorzugt, dass man der Reaktionsmischung im Verlaufe der Äquilibrierung Proben entnimmt und vorzugsweise mit Hilfe der ²⁹Si-NMR-Spektroskopie analysiert,
wobei man zur Auswertung vorzugsweise alle Integrale des für die Methylhydrogensiloxy-Triaden relevanten Verschiebungsbereiches von - 34,0 bis - 40,0 ppm und das Integral der für eine isolierte Methylhydrogensiloxygruppe stehenden Triaden (DD^{H}D bzw. auch MD^{H}D), die im Verschiebungsbereich von -36,8 bis -38,2 ppm erscheint, betrachtet. Vereinfachend wird im Rahmen der erfindungsgemäßen Lehre im Folgenden nur noch von der DD"D-Triade gesprochen, wobei klar ist, dass sich bei ähnlicher chemischer Verschiebung auch das NMR-Signal der MD^{H}D-Triade dort im Spektrum befindet.

Vorzugsweise kann man für jede entnommene Probe den Quotienten Q aus dem Integrationswert, der für die DD^{H}D-Triade ermittelt wird und dem Summenwert, der über allen Methylhydrogensiloxyeinheiten liegenden Integrale, ermitteln,
um die Entwicklung des prozentualen Anteils isolierter Methylhydrogensiloxygruppen ( DD^{H}D) in der Reaktionsmischung bezogen auf die Summe aller Methylhydrogensiloxygruppen als Funktion der Äquilibrierzeit zu erfassen.

Vorzugsweise werden hierbei die integrierten Signalintensitäten des ²⁹Si-NMR-Spektrums im Verschiebungsbereich um -35 ppm zur Analyse der jeweils vorliegenden Triadenverteilung (DD^{H}D vs. DD^{H}D^{H} vs. D^{H}D^{H}D^{H}) herangezogen.

Unter isothermen Reaktionsbedingungen, wie sie zum Beispiel durch die Verwendung eines Reaktionskalorimeters zu realisieren sind, kann vorzugsweise in einfacher Weise die Entwicklung der Schallgeschwindigkeit über die Reaktionszeit zur Verfolgung des Reaktionsfortschrittes herangezogen werden.

Unter den Bedingungen betrieblicher Praxis lässt sich eine derartige, idealisierte Temperaturkontrolle wie im Reaktionskalorimeter allerdings nur schwierig erreichen. Bekanntermaßen ist die Schallgeschwindigkeit in einem bestimmten Medium auch von der Temperatur abhängig. Diesem Einfluss Rechnung tragend, kann es daher für die nicht-isotherme Reaktionsführung erfindungsgemäß besonders bevorzugt sein, eine Korrekturfunktion zu ermitteln, die die Abhängigkeit der Schallgeschwindigkeit im jeweiligen Äquilibrat als Funktion der Temperatur abbildet. Zum Zwecke der späteren Messdatenauswertung kann es bevorzugt sein, die aufgenommene Schallgeschwindigkeit dann mit Hilfe der ermittelten Korrekturfunktion auf eine definierte Bezugstemperatur umzurechnen.

Mit dem Ziel der Endpunkterkennung der Äquilibrierung (bzw. Ermittlung des geeigneten Zeitpunktes zur Beendigung der Äquilibrierungsreaktion) verknüpft, ist es besonders bevorzugt, das jeweils fertige Äquilibrat als Bezugsmedium zu wählen und in diesem die Abhängigkeit der Schallgeschwindigkeit von der Temperatur zu ermitteln. Vorzugsweise ist es möglich, im gewählten Temperaturbereich (Tₘᵢₙ = 20°C und T ₘₐₓ = 50°C) von einem linearen Zusammenhang auszugehen und aus einer kleinen Anzahl an Wertepaaren eine entsprechende Geradengleichung herzuleiten.

Gleiche Reaktionsbedingungen vorausgesetzt, kann man somit vorzugsweise jeder individuellen Wasserstoffsiloxanstruktur zu jeder Reaktionszeit eine individuelle Schallgeschwindigkeit sowie eine zugehörige, spezifische Triadenverteilung zuschreiben.

Hat man auf diese Weise einmal für einen speziellen Strukturtyp von Wasserstoffsiloxan diese charakteristischen Parameter ermittelt, ist die Methode einfach und zuverlässig übertragbar, zum Beispiel zur Kontrolle und Bewertung der ggf. unter anderer Katalyse durchgeführten Äquilibrierung.

Hierbei sind vorzugsweise Aussagen zur erzielten statistischen Uniformität des äquilibrierten Wasserstoffsiloxans möglich oder vorzugsweise auch die Beantwortung der Frage, ob das Äquilibrat nach einer bestimmten Reaktionszeit bereits die angestrebte Verteilung von Methylhydrogensiloxygruppen erreicht hat.

Normiert man die für ein Wasserstoffsiloxan experimentell bestimmte, vorzugsweise temperaturkorrigierte Differenz der Schallgeschwindigkeiten (Schallgeschwindigkeit im Äquilibrat minus Schallgeschwindigkeit in der Äquilibriermischung) auf 100%, so zeigt sich, dass die angestrebte statistische Uniformität des SiH-Siloxans bereits dann erreicht ist, wenn die Änderung der Schallgeschwindigkeit vorzugsweise kleiner 0,25% pro 15 Minuten, bevorzugt kleiner 0,15% pro 15 Minuten ist.

Mit statistischer Uniformität des SiH-Siloxans ist gemeint, dass die Methylhydrogensiloxy-Einheiten entlang der Siloxankette weitestgehend statistisch verteilt vorliegen.

Die bevorzugte Korrelation bzw. bevorzugte Normierung der Schallgeschwindigkeit mit der hochauflösenden ²⁹Si-NMR-Spektroskopie kann es vorzugsweise ermöglichen, mit dem Ultraschallmessverfahren unmittelbar und direkt in der Produktion (In-Line) zu Qualitätsbewertungen zu gelangen, die man sonst nur über aufwendige Probenahme und Analytik an einem produktionsfernen Ort würde gewinnen können.

Somit kann die vorliegende Erfindung vorzugsweise nicht nur die zuverlässige Endpunkterkennung bei der säurekatalysierten Äquilibrierung von Wasserstoffsiloxanen ermöglichen, was für die Optimierung von Raum-Zeit-Ausbeuten und Chargentaktzeiten wichtig ist, sondern sie kann vorzugsweise auch das reproduzierbar-gezielte Ansteuern von Wasserstoffsiloxanen bestimmter Mikrostruktur, die für die Qualität der daraus hergestellten Wirktenside (Polyethersiloxane) entscheidend ist, ermöglichen.

Vorzugsweise kann es das erfindungsgemäße Verfahren auch ermöglichen, einer bei Heterogenkatalysatoren, wie zum Beispiel den sulfonsauren Harzen, über verschiedene Produktionszyklen hinweg etwaig nachlassenden Aktivität zu begegnen.

Dem Qualitätsgedanken verhaftet, kann man vorzugsweise ein Wasserstoffsiloxan bestimmter Mikrostruktur ansteuern. Ein erschöpfter Festphasenkatalysator würde sich dadurch zu erkennen geben, dass man zum Erreichen dieses Äquilibrierziels längere Reaktionszeiten benötigt. Mit Hilfe des erfindungsgemäßen Verfahrens kann man dann die Reaktionszeiten vorzugsweise entsprechend verlängern. Bevorzugte Indikatoren für das Erreichen des Äquilibrierziels und damit dem Aufbau einer vorzugsweise angestrebten Mikrostruktur im Wasserstoffsiloxancopolymer sind die Schallgeschwindigkeit im Äquilibrat, und noch bevorzugter die Ableitung der Schallgeschwindigkeit nach der Zeit, das heißt, die Schallgeschwindigkeitsänderung.

Das erfindungsgemäße Verfahren dient der Herstellung von Dimethylhydrogensiloxygruppen tragenden, unverzweigten Wasserstoffsiloxanen. Bevorzugte Dimethylhydrogensiloxygruppen tragende, unverzweigte Wasserstoffsiloxane sind äquilibrierte Wasserstoffsiloxane, die folgender, mittlerer Formel genügen: 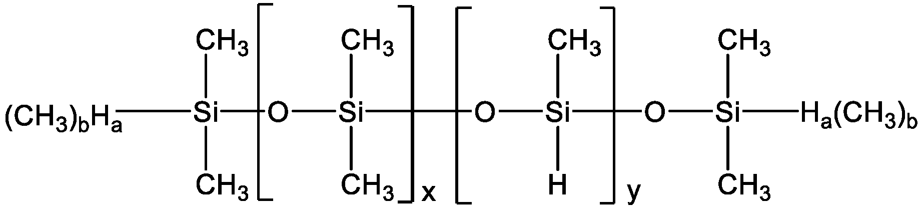 wobei $3 \leq x \leq 100 , bevorzugt 30 \leq x \leq 80$ $1 \leq y \leq 30 , bevorzugt 2 \leq y \leq 10 ,$ $a + b = 1$ $0 , 4 \leq a \leq 1 , 0 bevorzugt 0 , 6 \leq a \leq 0,95$ $0 \leq b \leq 0 , 6 , bevorzugt 0 , 05 \leq b \leq 0,4 .$ besonders bevorzugt x + y + 2 ≥ 13.

In dem erfindungsgemäßen Verfahren wird ein sulfonsaures Ionenaustauscherharz eingesetzt. Solche sulfonsauren Ionenaustauscherharz sind an sich bekannt.

Vorzugsweise wird ein makrovernetztes, wasserhaltiges und Sulfonsäuregruppen enthaltendes Kationenaustauscherharz eingesetzt, wobei dessen Produkt P aus spezifischer Oberfläche und mittlerem Porendurchmesser P ≥ 2,2 x 10⁻³m³/kg und die spezifische Oberfläche A ≥ 35 m²/g betragen und wobei es einen Wassergehalt von 6 bis 16 Gewichtsprozent, bevorzugt einen Wassergehalt von 8 bis 12 Gewichtsprozent bezogen auf das Gewicht des Kationenaustauscherharzes aufweist. Solche bevorzugten Kationenaustauscherharze sind an sich ebenfalls bekannt.

Vorzugsweise wird die erfindungsgemäße Äquilibrierungsreaktion bei einer Temperatur von 20°C bis 50°C, bevorzugt von 35°C bis 45°C in einem Zeitraum von vorzugsweise 4 bis 10 Stunden bevorzugt in einem Zeitraum von 5 bis 8 Stunden durchgeführt.

Vorzugsweise wird das erfindungsgemäße Verfahren, insbesondere bevorzugt die Äquilibrierungsreaktion, bei einem Druck bevorzugt von 800 mbar bis 1200 mbar, besonders bevorzugt von 950 mbar bis 1100 mbar durchgeführt.

Es kann bevorzugt sein, das erfindungsgemäße Reaktandsystem, umfassend mindestens zwei verschiedene Siloxane wie in Anspruch 1 angegeben, mit Wasser zu versetzen, um z.B. einer möglichen Wasserverarmung des sulfonsauren Kationenaustauscherharzes zu begegnen.

Solches kann vorzugsweise dadurch erreicht werden, dass man das sulfonsaure Kationenaustauscherharz z.B. in einem mit geeigneten Siebböden und/ oder Schlitzsieben versehenen Rezipienten vorlegt und dann z.B. mit Hilfe eines Förderorgans, vorzugsweise einer Pumpe die Äquilibriermischung über das derartig fixierte Kationenaustauscherharz fördert und diese aus Rezipienten und Pumpe bestehende Anordnung zum Beispiel mit einem, die Messsonde enthaltenden Rührreaktor verbindet, so dass durch diese bevorzugte Verschaltung insgesamt ein Reaktionsloop entsteht.

Eine solche örtliche Flüssig-Fest-Trennung lässt sich vorzugsweise auch dadurch erreichen, dass man in einem Rührreaktor das Kationenaustauscherharz unmittelbar in der Äquilibriermischung suspendiert und dann eine, zum Beispiel von einer Siebkonstruktion geschützte Ultraschallmesssonde in die Suspension eintaucht, so dass, bedingt durch eine dem Partikeldurchmesser des Kationenaustauscherharzes angepasste Maschenweite des Siebes, nur flüssige Volumenelemente das Sieb und somit die Messsonde passieren können.

Das folgende Beispiel dient allein zur weiteren Erläuterung der vorliegenden Erfindung und stellt keinerlei Beschränkung der vorliegenden Erfindung dar.

### Beispiel:

Im Rahmen vorliegender Erfindung wurden die ²⁹Si-NMR-Spektren mit einer Messfrequenz von 79,506 MHz in einem Bruker Avance Neo 400 Spektrometer, ausgerüstet mit einem Z 179883 Probenmesskopf mit einer Spaltweite von 10 mm, gelöst bei 22°C in CDCl₃ und gegen Tetramethylsilan (TMS) als externem Standard (d(²⁹Si) = 0,0 ppm) aufgenommen.

### Beispiel 1

In einem mit einer LiquiSonic^{®} Ultraschallmesssonde der Firma SensoTech GmbH (angeschlossen an einen Signaldatenaufnehmer von LiquiSonic^{®}Lab) ausgestatteten Reaktionskalorimeter des Typs RC1 (Firma Mettler-Toledo) wurden 119 g eines Poly(methylhydrogen)siloxans (SiH-Wert = 15,60 mol/kg) gemeinsam mit 377 g eines α,ω-Dihydrogenpolydimethylsiloxans (SiH-Wert = 2,88 mol/kg) und 1304 g Dekamethylcyclopentasiloxan unter Rühren vorgelegt und auf 40°C erwärmt. Das Reaktionskalorimeter war über den Bodenablass mit der als Schlaucholive ausgebildeten, unteren Öffnung einer aus Hülse und Kern bestehenden, senkrecht angeordneten, zylindrischen gläsernen Doppelfritte (Porosität P1) verbunden, in welcher 108 g eines auf 10% Wassergehalt vorgetrockneten sulfonsauren Kationenaustauscherharzes (Lewatit^{®} K2621) vorgelegt wurden. Die obere, ebenfalls als Schlaucholive gestaltete Öffnung der Doppelfritte war mit Hilfe eines Schlauches saugseitig mit einer Dosiermembranpumpe (Typ ProMinent Gamma/ L) verbunden, die druckseitig über einen Schlauch mit einem Befüllrohr verbunden war, welches in das Reaktionskalorimeter eintauchte.

Insgesamt stellte die hier beschriebene Verschaltung der Anlagenkomponenten somit einen geschlossenen Umlauf (Reaktionsloop) dar.

Die Membranpumpe wurde auf einen Volumenstrom von 11L pro Stunde eingestellt und man ließ die Reaktionsmischung unter ständigem Rühren im Reaktionskalorimeter und unter Umpumpen 6 Stunden lang das in der Doppelfritte vorgelegte Kationenaustauscherharz im Umlauf passieren. Mit Hilfe einer mit einer langen Kanüle versehenen Spritze wurden durch einen Septenaufsatz zum Zeitpunkt *t = 0, t* = 30 Minuten, *t* = 60 Minuten, *t =* 90 Minuten, *t =* 120 Minuten, *t =* 180 Minuten, *t =* 240 Minuten, *t* = 300 Minuten und *t* = 360 Minuten Proben von jeweils 5 ml aus dem Reaktionskalorimeter entnommen und danach mit Hilfe der ²⁹Si-NMR-Spektroskopie analysiert.

Bei der Auswertung der aufgenommenen ²⁹Si-NMR-Spektren wurden alle Integrale des für die Methylhydrogensiloxy-Triadensignale relevanten Verschiebungsbereiches von - 34,0 bis - 40,0 ppm und insbesondere das Integral des für eine isolierte Methylhydrogensiloxygruppe stehenden Triadensignals (DD^{H}D), das im Verschiebungsbereich von -36,8 bis -38,2 ppm erscheint, betrachtet (siehe **FIG. 1****).**

Für jede reaktionsbegleitend gezogene Probe bildete man den Quotienten aus dem Integrationswert, der für das DD"D-Triadensignal ermittelt wurde und dem Summenwert der über allen Methylhydrogensiloxyeinheiten enthaltenden Signale liegenden Integrale (= *I* (D^{H} ges.) und normierte auf 100% (siehe Tabelle 1).

Auf Basis dieser so ermittelten Werte ließ sich die Entwicklung des prozentualen Anteils isolierter Methylhydrogensiloxygruppen (= DD^{H}D) im Wasserstoffsiloxanäquilibrat bezogen auf die Summe aller Methylhydrogensiloxygruppen als Funktion der Äquilibrierzeit darstellen (siehe **FIG. 2****).**

Bei einer Reaktionstemperatur von 40°C wurden sowohl die Schallgeschwindigkeit als auch die Ableitung der Schallgeschwindigkeit nach der Zeit erfasst. Die Schallgeschwindigkeit wurde über die gesamte Reaktionszeit sowie die Änderung der Schallgeschwindigkeit pro Minute erfasst.

In **FIG. 3** sind der zeitliche Verlauf der temperaturkorrigierten Schallgeschwindigkeit über die Reaktionszeit bei einer Reaktionstemperatur von 40°C sowie die Änderung der temperaturkorrigierten Schallgeschwindigkeit pro Minute dargestellt. Die temperaturkorrigierte Schallgeschwindigkeit wurde, wie weiter unten angegeben, berechnet.

Die winzigen Abweichungen vom idealen Kurvenverlauf bei der Auftragung dieser Ableitung der temperaturkorrigierten Schallgeschwindigkeit nach der Zeit erklären sich durch die Probennahmen zu den jeweiligen Zeitpunkten.

Durch die erfindungsgemäße Äquilibrierung wurde folgende mittlere Wasserstoffsiloxanstruktur angestrebt: 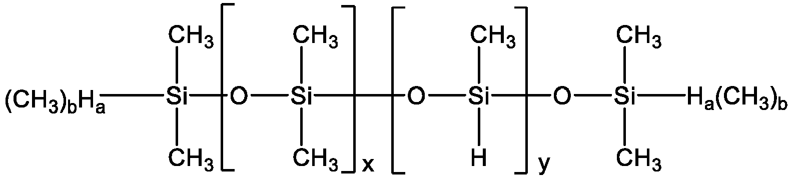 wobei x = 36,85 und y = 3,15, und a =0,92 und b = 0,08 sind.

Begleitende ²⁹Si-NMR-Spektroskopie sicherte den Erhalt dieses so strukturierten Wasserstoffsiloxanäquilibrats ab.

Um nicht an eine isotherme Fahrweise gebunden zu sein, wurde eine Korrekturfunktion ermittelt, die den Einfluss der Temperatur auf die Schallgeschwindigkeit in diesem Wasserstoffsiloxanäquilibrat abbildet. Hierzu wurden die Schallgeschwindigkeiten im Temperaturbereich zwischen 25°C und 55°C gemessen und die erhaltenen Wertepaare mit Hilfe einer Ausgleichsgeraden miteinander verbunden.

Die Steigung der Geraden ergab die Änderung der Schallgeschwindigkeit pro Grad Celsius als Abweichung zur jeweiligen Bezugstemperatur T (Bezug).

Für das oben bezeichnete Wasserstoffsiloxanäquilibrat betrug die Steigung -2,697 (m/s)/°C, so dass sich die gemessenen Schallgeschwindigkeiten v (Messung) in temperaturkorrigierte Schallgeschwindigkeiten v (korr.) umrechnen lassen: $v \left(korr.\right) = v \left(Messung\right) - 2 , 697 \left(m/s\right) / ° C * \left(T \left(Bezug\right)-T \left(Messung\right)\right) .$

Kombiniert man die erfindungsgemäß zuvor durch ²⁹Si-NMR-Analytik ermittelten Triadenverteilungen mit diesen, für ein dezidiertes Wasserstoffsiloxan experimentell bestimmten, temperaturkorrigierten Schallgeschwindigkeiten gelangt man zu den in **FIG.** 4 dargestellten Auftragungen.

Es korrelierte zu jedem Zeitpunkt der Reaktion eine Schallgeschwindigkeit mit einer individuellen Mikrostruktur auf dem Weg zum äquilibrierten Wasserstoffsiloxan. Die Kurve, vgl. **FIG. 4****,** die die temperaturkorrigierte Differenz der Schallgeschwindigkeiten beschreibt, nimmt einen asymptotischen Verlauf.

Es wurde festgestellt, dass die besonders bevorzugte statistische Uniformität des Wasserstoffsiloxans bereits dann erreicht ist, wenn die Schallgeschwindigkeitsänderung kleiner 0,25% pro 15 Minuten, bevorzugt kleiner 0,15% pro 15 Minuten ist.

**Tabelle 1: Auswertung ²⁹Si-NMR-Spektren, Bestimmung des Anteils an DD"D-Triaden.**

| Probe | *t* / h | *I* (D^{H} ges.) | *I* | *I* / *I* (D^{H} ges.) |
|---|---|---|---|---|
| Eduktmischung | 0,0 | 87,52 | 0 | 0,0 |
| Probe 1 | 0,5 | 103,77 | 32,51 | 0,31 |
| Probe 2 | 1,0 | 106,6 | 50,69 | 0,48 |
| Probe 3 | 1,5 | 107,49 | 61,81 | 0,58 |
| Probe 4 | 2,0 | 108,69 | 70,55 | 0,65 |
| Probe 5 | 3,0 | 108,31 | 79,93 | 0,74 |
| Probe 6 | 4,0 | 109,55 | 82,98 | 0,76 |
| Probe 7 | 5,0 | 106,93 | 84,71 | 0,79 |
| Probe 8 | 6,0 | 110,98 | 86,76 | 0,78 |

| | | | | |
|---|---|---|---|---|
| *I* (D^{H} ges.) = Summe der Integrale im Verschiebungsbereich von - 34,0 bis - 40,0 ppm *I* = Integral von -36,8 bis -38,2 ppm | | | | |

## Patentansprüche

1. Verfahren zum Herstellen von Dimethylhydrogensiloxygruppen tragenden, unverzweigten Wasserstoffsiloxanen, umfassend:
Bereitstellen einer Siloxan-Mischung umfassend mindestens zwei verschiedene Siloxane und Reagierenlassen dieser Siloxan-Mischung in Gegenwart eines sulfonsauren Ionenaustauscherharzes im Sinne einer Äquilibrierungsreaktion unter Bildung einer Reaktionsmischung, wobei die eingesetzten Siloxane zusammen betrachtet über Dimethylhydrogensiloxygruppen, Methylhydrogensiloxygruppen, Dimethylsiloxygruppen sowie vorzugsweise über Trimethylsiloxygruppen verfügen, **dadurch gekennzeichnet, dass** man
(a) die Reaktionsmischung durch Ultraschallmessung überwacht, um den geeigneten Zeitpunkt zur Beendigung der Äquilibrierungsreaktion zu ermitteln,
(b) die Äquilibrierungsreaktion beendet, wenn der in (a) ermittelte Zeitpunkt erreicht ist.

2. Verfahren nach Anspruch 1, **dadurch gekennzeichnet, dass** durch die Ultraschallmessung die Schallgeschwindigkeit in der Reaktionsmischung und/oder die Ableitung der Schallgeschwindigkeit nach der Zeit in der Reaktionsmischung erfasst werden.

3. Verfahren nach Anspruch 1 oder 2, **dadurch gekennzeichnet, dass** der geeignete Zeitpunkt zur Beendigung der Äquilibrierungsreaktion über die Änderung der Schallgeschwindigkeit in der Reaktionsmischung bestimmt wird.

4. Verfahren nach Anspruch 3, **dadurch gekennzeichnet, dass** die Schallgeschwindigkeit in der Reaktionsmischung vor Start der Äquilibrierungsreaktion verglichen wird mit dem Verlauf der Schallgeschwindigkeit bei Fortgang der Äquilibrierungsreaktion.

5. Verfahren nach einem der Ansprüche 1 bis 4, **dadurch gekennzeichnet, dass** der geeignete Zeitpunkt zur Beendigung der Äquilibrierungsreaktion erreicht ist, wenn die Änderung der Schallgeschwindigkeit kleiner 0,25% pro 15 Minuten, bevorzugt kleiner 0,15% pro 15 Minuten ist.

6. Verfahren nach einem der Ansprüche 1 bis 5, **dadurch gekennzeichnet, dass** zunächst im jeweils betrachteten Medium, vorzugsweise in dem betreffenden Dimethylhydrogensiloxygruppen tragenden, unverzweigten Wasserstoffsiloxan, der Einfluss der Messtemperatur auf die Schallgeschwindigkeit ermittelt wird, um eine Korrekturfunktion zu bestimmen, so dass sich gemessenen Schallgeschwindigkeiten in temperaturkorrigierte Schallgeschwindigkeiten umrechnen lassen.

7. Verfahren nach einem der Ansprüche 1 bis 6, **dadurch gekennzeichnet, dass** man der Reaktionsmischung im Verlaufe der Äquilibrierungsreaktion Proben entnimmt und mit Hilfe der ²⁹Si-NMR-Spektroskopie analysiert, wobei man zur Auswertung vorzugweise alle Integrale des für die Methylhydrogensiloxy-Triaden relevanten Verschiebungsbereiches von - 34,0 bis - 40,0 ppm und das Integral der für eine isolierte Methylhydrogensiloxygruppe stehenden Triade (DD^{H}D), die im Verschiebungsbereich von -36,8 bis -38,2 ppm erscheint, betrachtet,
und wobei man für jede entnommene Probe vorzugsweise den Quotienten Q aus dem Integrationswert, der für die DD^{H}D-Triade ermittelt wird, und dem Summenwert der über allen Methylhydrogensiloxyeinheiten liegenden Integrale bildet,
um die Entwicklung des prozentualen Anteils isolierter Methylhydrogensiloxygruppen in der Reaktionsmischung bezogen auf die Summe aller Methylhydrogensiloxygruppen als Funktion der Äquilibrierzeit zu erfassen.

8. Verfahren nach einem der Ansprüche 1 bis 7, **dadurch gekennzeichnet** das das äquilibrierte Wasserstoffsiloxan folgender, mittlerer Formel genügt: 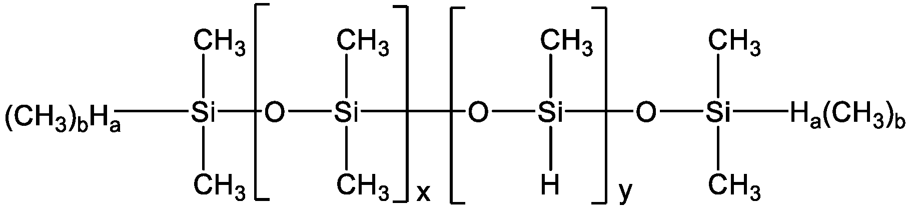 wobei gilt: $3 \leq x \leq 100 , bevorzugt 30 \leq x \leq 80 ,$ $1 \leq y \leq 30 , bevorzugt 2 \leq y \leq 10 ,$ $a + b = 1 ,$ $0 , 4 \leq a \leq 1 , 0 , bevorzugt 0 , 6 \leq a \leq 0 , 95$ $0 \leq b \leq 0 , 6 , bevorzugt 0 , 05 \leq b \leq 0 , 4 .$ besonders bevorzugt ist x + y + 2 ≥ 13.

9. Verfahren nach einem der Ansprüche 1 bis 8 , **dadurch gekennzeichnet, dass** als sulfonsaures Ionenaustauscherharz ein makrovernetztes, wasserhaltiges und Sulfonsäuregruppen enthaltendes Kationenaustauscherharz eingesetzt wird, wobei dessen Produkt P aus spezifischer Oberfläche und mittlerem Porendurchmesser P vorzugsweise ≥ 2,2 x 10⁻³m³/kg und die spezifische Oberfläche A vorzugsweise ≥ 35 m²/g betragen und dass es einen Wassergehalt vorzugsweise von 6 bis 16 Gewichtsprozent, bevorzugt einen Wassergehalt von 8 bis 12 Gewichtsprozent bezogen auf das Gewicht des Kationenaustauscherharzes aufweist.

10. Verfahren nach einem der Ansprüche 1 bis 9, **dadurch gekennzeichnet, dass** man die Äquilibrierungsreaktion bei einer Temperatur von 20°C bis 50°C, bevorzugt von 35°C bis 45°C in einem Zeitraum vorzugsweise von 4 bis 10 Stunden bevorzugt 5 bis 8 Stunden durchführt.

11. Verfahren einem der Ansprüche 1 bis 10, **dadurch gekennzeichnet, dass** zur Ultraschallmessung eine Ultraschallmesssonde eingesetzt wird, wobei die Anordnung der Ultraschallmesssonde vorzugsweise so gewählt wird, dass nur flüssige Bestandteile an der Messsonde vorbeiströmen können und erfasst werden.

## Claims

1. Process for preparing unbranched hydrosiloxanes bearing dimethylhydrosiloxy groups, comprising:
providing a siloxane mixture comprising at least two different siloxanes and allowing said siloxane mixture to react in the presence of a sulfonic acid ion exchange resin in an equilibration reaction to form a reaction mixture, where the siloxanes used collectively have dimethylhydrosiloxy groups, methylhydrosiloxy groups, dimethylsiloxy groups and preferably trimethylsiloxy groups, **characterized in that**
(a) the reaction mixture is monitored by ultrasound measurement in order to ascertain the suitable juncture for ending of the equilibration reaction,
(b) the equilibration reaction is ended once the juncture ascertained in (a) has been reached.

2. Process according to Claim 1, **characterized in that** the ultrasound measurement detects the speed of sound in the reaction mixture and/or the derivative of the speed of sound after the time in the reaction mixture.

3. Process according to Claim 1 or 2, **characterized in that** the suitable juncture for ending of the equilibration reaction is determined via the change in speed of sound in the reaction mixture.

4. Process according to Claim 3, **characterized in that** the speed of sound in the reaction mixture prior to commencement of the equilibration reaction is compared with the progression of the speed of sound as the equilibration reaction progresses.

5. Process according to any of Claims 1 to 4, **characterized in that** the suitable juncture for ending of the equilibration reaction has been attained when the change in speed of sound is less than 0.25% per 15 minutes, preferably less than 0.15% per 15 minutes.

6. Process according to any of Claims 1 to 5, **characterized in that** the effect of the measurement temperature on the speed of sound is first ascertained in the respective medium in question, preferably in the unbranched hydrosiloxane bearing dimethylhydrosiloxy groups in question, in order to determine a correction function such that measured speeds of sound can be converted to temperature-corrected speeds of sound.

7. Process according to any of Claims 1 to 6, **characterized in that** samples are taken from the reaction mixture over the course of the equilibration reaction and analysed with the aid of ²⁹Si NMR spectroscopy, with evaluation preferably by considering all integrals of the shift range of -34.0 to -40.0 ppm that is of relevance to the methylhydrosiloxy triads and the integral of the triads (DD^{H}D) representing an isolated methylhydrosiloxy group, which appears in the shift range from -36.8 to - 38.2 ppm,
and where, for each sample taken, the quotient Q is preferably formed from the integration value which is ascertained for the DD^{H}D triads, and the cumulative value of the integrals over all methylhydrosiloxy units,
in order to detect the evolution of the percentage of isolated methylhydrosiloxy groups (DD^{H}D) in the reaction mixture based on the sum total of all methylhydrosiloxy groups as a function of the equilibration time.

8. Process according to any of Claims 1 to 7, **characterized in that** the equilibrated hydrosiloxane satisfies the following average formula: 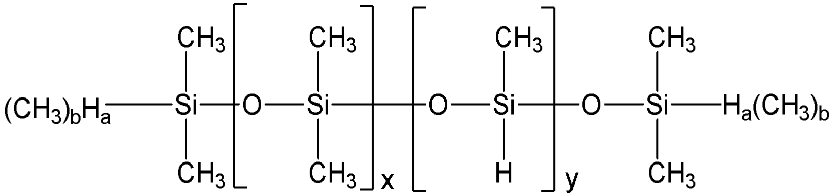 wherein: $3 \leq x \leq 100 , preferably 30 \leq x \leq 80 ,$ $1 \leq y \leq 30 , preferably 2 \leq y \leq 10 ,$ $a + b = 1 ,$ $0.4 \leq a \leq 1.0 , preferably 0.6 \leq a \leq 0.95 ,$ $0 \leq b \leq 0.6 , preferably 0.05 \leq b \leq 0.4 ,$ more preferably x + y + 2 ≥ 13.

9. Process according to any of Claims 1 to 8, **characterized in that** the sulfonic acid ion exchange resin used is a macrocrosslinked, water-containing cation exchange resin containing sulfonic acid groups, wherein the product P thereof of specific surface area and average pore diameter P is preferably ≥ 2.2 x 10⁻³m³/kg and the specific surface area A is preferably ≥ 35 m²/g, and **in that** it has a water content preferably of 6 to 16 per cent by weight, preferably a water content of 8 to 12 per cent by weight, based on the weight of the cation exchange resin.

10. Process according to any of Claims 1 to 9, **characterized in that** the equilibration reaction is conducted at a temperature of 20°C to 50°C, preferably of 35°C to 45°C, within a period preferably of 4 to 10 hours, preferably 5 to 8 hours.

11. Process according to any of Claims 1 to 10, **characterized in that** ultrasound measurement is accomplished using an ultrasound measurement probe, where the arrangement of the ultrasound measurement probe is preferably chosen such that only liquid constituents can flow past the measurement probe and be detected.

## Revendications

1. Procédé de préparation d'hydrogénosiloxanes non ramifiés, portant des groupes diméthylhydrogénosiloxy, comprenant :
la mise à disposition d'un mélange de siloxanes comprenant au moins deux siloxanes différents et le fait de laisser réagir ce mélange de siloxanes en présence d'une résine échangeuse d'ions acide sulfonique dans le sens d'une réaction d'équilibrage avec formation d'un mélange réactionnel, les siloxanes utilisés, considérés dans leur ensemble, disposant de groupes diméthylhydrogénosiloxy, de groupes méthylhydrogénosiloxy, de groupes diméthylsiloxy ainsi que de préférence de groupes triméthylsiloxy, **caractérisé en ce qu'**on
(a) surveille le mélange réactionnel par une mesure par ultrasons afin de déterminer le moment approprié pour l'interruption de la réaction d'équilibrage,
(b) interrompt la réaction d'équilibrage lorsque le moment déterminé dans (a) est atteint.

2. Procédé selon la revendication 1, **caractérisé en ce que**, par la mesure par ultrasons, la vitesse du son dans le mélange réactionnel et/ou la dérivée de la vitesse du son en fonction du temps dans le mélange réactionnel sont détectées.

3. Procédé selon la revendication 1 ou 2, **caractérisé en ce que** le moment approprié pour l'interruption de la réaction d'équilibrage est défini par l'intermédiaire de la modification de la vitesse du son dans le mélange réactionnel.

4. Procédé selon la revendication 3, **caractérisé en ce que** la vitesse du son dans le mélange réactionnel avant le démarrage de la réaction d'équilibrage est comparée à l'évolution de la vitesse du son lors de la progression de la réaction d'équilibrage.

5. Procédé selon l'une des revendications 1 à 4, **caractérisé en ce que** le moment approprié pour l'interruption de la réaction d'équilibrage est atteint lorsque la modification de la vitesse du son est inférieure à 0,25% par 15 minutes, de préférence inférieure à 0,15% par 15 minutes.

6. Procédé selon l'une des revendications 1 à 5, **caractérisé en ce qu'**on détermine d'abord, dans le milieu respectif pris en considération, de préférence dans l'hydrogénosiloxane non ramifié, portant des groupes diméthylhydrogénosiloxy en question, l'influence de la température de mesure sur la vitesse du son afin de définir une fonction de correction de telle sorte que les vitesses du son mesurées peuvent être recalculées en vitesses du son corrigées en fonction de la température.

7. Procédé selon l'une des revendications 1 à 6, **caractérisé en ce qu'**on prélève des échantillons du mélange réactionnel au cours de la réaction d'équilibrage et on les analyse à l'aide de la spectroscopie ²⁹Si-RMN, dans lequel on prend en considération pour l'évaluation de préférence toutes les intégrales de la plage de déplacement pertinente pour les triades de méthylhydrogénosiloxy de -34,0 à -40,0 ppm et l'intégrale de la triade représentant un groupe méthylhydrogénosiloxy isolé (DD^{H}D), qui survient dans la plage de déplacement de -36,8 à -38,2,
et dans lequel on forme, pour chaque échantillon prélevé, de préférence le quotient Q de la valeur d'intégration qui est déterminée pour la triade DD^{H}D et de la valeur de la somme des intégrales située sur tous les motifs méthylhydrogénosiloxy,
afin de détecter le développement de la proportion en pour cent de groupes méthylhydrogénosiloxy isolés dans le mélange réactionnel par rapport à la somme de tous les groupes méthylhydrogénosiloxy en fonction du temps d'équilibrage.

8. Procédé selon l'une des revendications 1 à 7, **caractérisé en ce que** l'hydrogénosiloxane équilibré satisfait à la formule moyenne suivante : 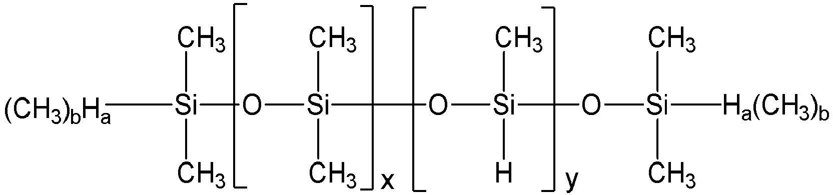 dans laquelle : $3 \leq x \leq 100 , de préférence 30 \leq x \leq 80 ,$ $1 \leq y \leq 30 , de préférence 2 \leq y \leq 10 ,$ $a + b = 1 ,$ $0 , 4 \leq a \leq 1 , 0 , de préférence 0 , 6 \leq a \leq 0 , 95$ $0 \leq b \leq 0 , 6 , de préférence 0 , 05 \leq b \leq 0 , 4 .$ de manière particulièrement préférée, x + y + 2 ≥ 13.

9. Procédé selon l'une des revendications 1 à 8, **caractérisé en ce qu'**on utilise, en tant que résine échangeuse d'ions acide sulfonique, une résine échangeuse de cations macroréticulée, contenant de l'eau et contenant des groupes acide sulfonique, son produit P de la surface spécifique et du diamètre moyen de pore P étant de préférence ≥ 2,2 x 10⁻³ m³/kg et la surface spécifique A étant de préférence ≥ 35 m²/g et **en ce qu'**elle présente une teneur en eau de préférence de 6 à 16% en poids, de préférence une teneur en eau de 8 à 12% en poids, par rapport au poids de la résine échangeuse de cations.

10. Procédé selon l'une des revendications 1 à 9, **caractérisé en ce qu'**on effectue la réaction d'équilibrage à une température de 20°C à 50°C, de préférence de 35°C à 45°C en une période de préférence de 4 à 10 heures, de préférence de 5 à 8 heures.

11. Procédé selon l'une des revendications 1 à 10, **caractérisé en ce qu'**on utilise, pour la mesure des ultrasons, une sonde de mesure d'ultrasons, l'agencement de la sonde de mesure d'ultrasons étant de préférence choisie de manière telle que seuls des constituants liquides peuvent s'écouler le long de la sonde de mesure et être détectés.
